# EUROPÄISCHE PATENTSCHRIFT

(11) **EP 1 620 709 B1**
(45) Veröffentlichungstag und Bekanntmachung des Hinweises auf die Patenterteilung: **27.05.2009**
(21) Anmeldenummer: 04729807.0
(22) Anmeldetag: 28.04.2004
(51) Int. Cl.: G01N 1/06, B26D 7/08

(54) **HALTERUNG MIT EINEM OSZILLIERBAR BEWEGBAREN MESSER EINES ULTRAMIKROTOMS**
HOLDER PROVIDED WITH AN OSCILLATORY MOVABLE ULTRAMICROTOM CUTTER
SUPPORT EQUIPE D'UN COUTEAU D'ULTRAMICROTOME POUVANT ETRE ANIME D'UN MOUVEMENT OSCILLATOIRE

(30) Priorität: 02.05.2003 CH 771032003
(43) Veröffentlichungstag der Anmeldung: 01.02.2006
(73) Patentinhaber: Anton Meyer & Co. AG, 2562 Port (CH)
(72) Erfinder: STUDER, Daniel, CH-3293 Dotzigen (CH)
(74) Vertreter: Clerc, Natalia
(86) Internationale Anmeldenummer: PCT/CH2004/000256
(87) Internationale Veröffentlichungsnummer: WO 2004/097374

(56) Entgegenhaltungen:
- EP-A- 0 924 503
- EP-A- 1 101 577
- BE-A- 440 928
- CH-A- 690 296
- DE-A- 19 951 288
- DE-C- 3 820 085
- US-A- 4 168 577
- US-A- 4 567 797

## Beschreibung

### Technisches Gebiet

Die Erfindung betrifft eine Halterung mit einem oszillierbar bewegbaren Messer eines Ultramikrotoms gemäss Oberbegriff des Patentanspruchs 1.

### Stand der Technik

In EP-A-0'924'503 wird vorgeschlagen, ein Messer eines Ultramikrotoms parallel zu seiner Schneide zu oszillieren, um ultradünne, unverzerrt geschnittene Probenstücke im Bereich von 10 bis 200 nm zu erhalten. Das Messer ist auf einem Messerhalter befestigt, welcher über ein Federelement mit einer Basis verbunden ist. Auf einem ebenfalls mit der Basis verbundenen zweiten Halter ist ein Piezoelements angeordnet, welches auf den Messerhalter eine Kraft ausübt, um die Messerklinge zu oszillieren.

Obwohl mit derartig angetriebenen Ultramikrotom-Messern in einigen Fällen gute Resultate erzielt werden, gibt es doch immer wieder auch Proben mit ungenügender Schnittqualität. Dies ist insbesondere in der Cryo-Ultramikrotomie der Fall, wo tiefgekühlte Proben in einem Temperaturbereich von bis zu -160° C geschnitten werden.

DE-C-38'20'085 offenbart ein Ultramikroton, welches an einer Basis einen Messerhalter mit einem Schneidmesser aufweist. Das Messer selber ist über Lager gehalten, wobei diese Lager mittels eines Piezoelements bewegbar sind.

### Darstellung der Erfindung

Es ist deshalb Aufgabe der Erfindung, die Halterung für ein Messer eines Ultramikrotoms der eingangs genannten Art zu verbessern.

Diese Aufgabe löst eine Halterung mit den Merkmalen des Patentanspruchs 1.

In der erfindungsgemässen Halterung ist das Messer von einem das Messer oszillierenden Piezoelement getragen. Vorzugsweise ist das Messer ansonsten freihängend. Es ist somit ausschliesslich vom Piezoelement getragen.

Das Piezoelement muss dadurch nur noch eine relativ geringe Masse bewegen. Es lassen sich somit höhere Frequenzen erzielen und die Bewegung kann gezielter ausgeführt werden. Drifts können auf ein Minimum reduziert werden.

Es können ultradünne Schnitte beziehungsweise Probenstücke erhalten werden. Die erhaltenen Schnitte sind regelmässig und das geschnittene Probenstück ist nicht gestaucht sondern bewahrt seine ursprüngliche Form. Die erfindungsgemässe Halterung ist, wenn auch nicht ausschliesslich, zur Verwendung in der Cryo-Ultramikrotomie geeignet.

Ein weiterer Vorteil ist, dass die erfindungsgemässe Halterung einen sehr einfachen Aufbau aufweist. Sie lässt sich somit mit höchster Genauigkeit und trotzdem relativ kostengünstig herstellen.

Vorzugsweise werden sogenannte Scher(Shear)-Piezokristalle oder -keramiken verwendet, welche sich in Richtung senkrecht zur angelegten Spannung ausdehnen oder zusammenziehen, also eine Scherbewegung ausführen. Mittels dieser Piezoelemente lässt sich auf einfache Weise eine oszillierende Bewegung parallel zur Messerschneide erzielen.
Weitere vorteilhafte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, erläutert. Es zeigen:
- Figur 1a: eine perspektivische Darstellung einer erfindungsgemässen Halterung von vorne in einer ersten Ausführungsform;
- Figur 1b: einen Teilschnitt durch die Halterung gemäss Figur 1a;
- Figur 2a: eine perspektivische Darstellung der Halterung gemäss Figur 1a und einer Probenhalterung;
- Figur 2b: eine Explosionsdarstellung der Figur 2a;
- Figur 3: einen Teilschnitt durch eine erfindungsgemässe Halterung gemäss einer zweiten Ausführungsform und
- Figur 4: eine perspektivische Darstellung einer Halterung gemäss einer nicht zur Erfindung gehörende Ausführungsform.

### Wege zur Ausführung der Erfindung

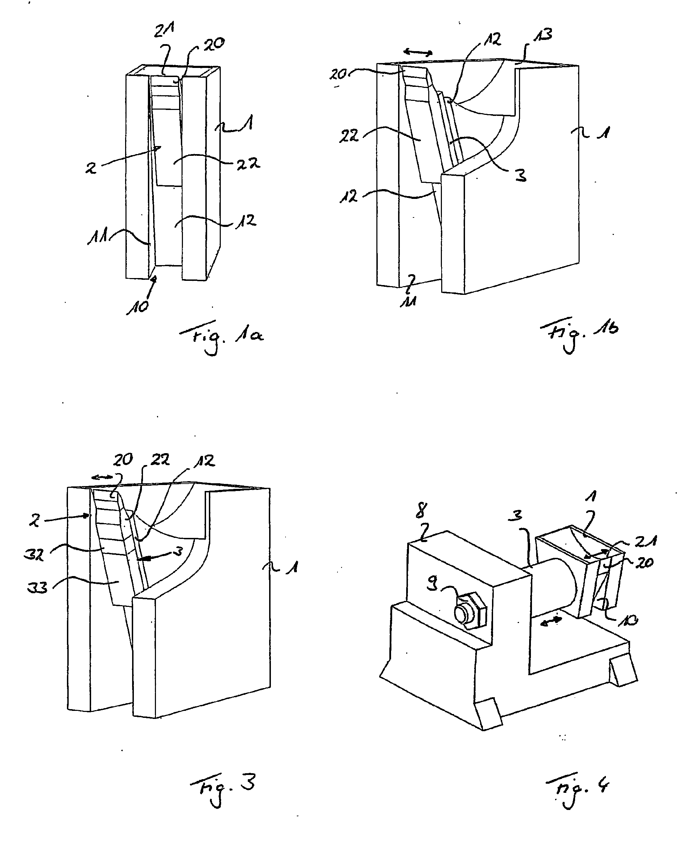

In den Figuren 1a und 1b ist eine erfindungsgemässe Halterung gemäss einer ersten bevorzugten Ausführungsform dargestellt. Die Halterung weist einen Messerhalter 1, ein Messer 2 und ein erstes Piezoelement 3 auf.

Der Messerhalter 1 ist vorzugsweise aus einem Metall oder aus einem Kunststoff gefertigt und weist vorzugsweise eine quaderförmige Grundform auf. Er verfügt an einer Stirnfläche über eine Nut 10, welche durch Seitenwände 11 und einen Nutgrund 12 begrenzt ist. Die Seitenwände 11 verlaufen vorzugsweise parallel zueinander und bilden mit dem Nutgrund 12 vorzugsweise einen mindestens annähernd rechten Winkel. Der Nutgrund 12 ist als Schrägfläche ausgebildet, das heisst er verläuft geneigt zu den Seitenwänden 11. An einem Ende des Nutgrunds 12 kann der Messerhalter 1 hinter der Nut 10 eine Senke 13 aufweisen. Wird das Messer in der klassischen Ultramikrotomie verwendet, so dient diese Senke 13 zur Aufnahme von Wasser. Geschnittene Probenstücke schwimmen auf diesem Wasser. Wird das Messer in der Cryo-Ultramikrotomie verwendet, so erübrigt sich die Senke. Die geschnittenen Probenstücke gleiten in diesem Fall auf der Messeroberfläche, von wo sie abgehoben werden.

Das Piezoelement 3 ist auf dem Nutgrund 12 befestigt. Vorzugsweise ist es daran festgeklebt. Hierfür eignen sich alle bekannten Klebstoffe, welche eine genügend starke Verbindung ermöglichen. Insbesondere bei Tieftemperaturanwendungen muss der Klebstoff auch bei hohen Temperaturdifferenzen, welche durchaus bis zu 180°C, nämlich von -160°C bis zur Zimmertemperatur, betragen können, beständig sein.

Das Piezoelement 3 ist vorzugsweise als flacher Quader mit planparallelen ersten und zweiten Auflageflächen 30, 31 ausgebildet. Mit der ersten Auflagefläche 30 ist er mit dem Messerhalter 1 verklebt, auf der zweiten Auflagefläche 31 ist das Messer 2 angeklebt, welches somit vom Piezoelement 3 getragen ist und ansonsten freihängend ist. Auf beiden Seiten lassen sich auch andere Befestigungsarten verwenden. Das Piezoelement 3 ist hier ein Scher-Piezoelement. Bei einem angelegten elektrischen Feld führt es somit eine Scher-Bewegung senkrecht zu den Feldlinien aus. Das Scher-Piezoelement kann ein- oder mehrlagig sein. Auf beiden Seitenflächen, welche hier die Auflageflächen 30, 31 bilden, sind Metallschichten aufgedampft, an denen Kontaktdrähte angebracht sind.

Es bewegt sich im Messerhalter 1 mindestens annähernd, vorzugsweise genau parallel zum Nutgrund 12. Die Nut 12 weist hierfür eine Breite auf, welche grösser ist als die Breite des Piezoelements 3 und als die Breite eines nachfolgend beschriebenen Klingenhalters 22 des Messers 2. Typische Oszillationsfrequenzen liegen zwischen 30 kHz und 200 kHz. Hohe Frequenzen haben den Vorteil, dass der Drift relativ gering ist und dass die Qualität der geschnittenen Probenstücke, das heisst der Schnitte, hoch ist.

Das Messer 2 weist einen vorzugsweise quaderförmigen Klingenhalter 22 und eine daran angeordnete Klinge 20 mit einer Schneide 21 auf. Die Schneide 21 verläuft mindestens annähernd parallel zur zweiten Auflagefläche 31 des Piezoelements 3 und somit zum Nutgrund 12. Wird eine Wechselspannung an das Piezoelement 3 angelegt, so oszilliert das Messer mindestens annähernd parallel, vorzugsweise genau parallel zur Ausdehnungsrichtung seiner Schneide 21. Dies ist in der Figur mit einem Pfeil dargestellt.

Der Klingenhalter 22 und die Klinge 20 können einstückig ausgebildet sein. Es ist jedoch auch möglich, sie mehrstückig auszubilden, so dass die Klinge 20 für sich alleine ausgewechselt werden kann. Sind sie einstückig ausgebildet, so wird vorzugsweise die gesamte Halterung ausgewechselt. Mindestens die Klinge 20 besteht vorzugsweise aus Diamant.

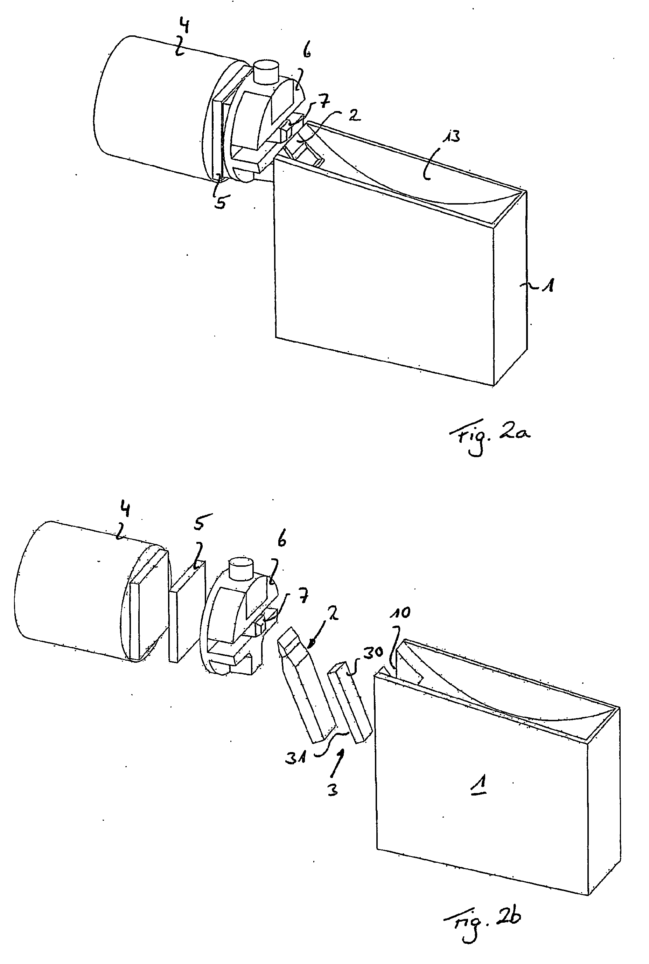

In den Figuren 2a und 2b ist die Halterung in Wirkverbindung mit einer zu schneidenden Probe 7 dargestellt. Die Probe 7 kann ein beliebiges Material sein, für welches zwecks Analyse unter einem geeigneten Mikroskop ein ultradünnes Stück abgeschnitten werden soll. Wie eingangs erwähnt, können mindestens Schnittdicken zwischen 10 bis 100 nm erzielt werden, wobei die Qualität der ultradünnen Schnitte mit der erfindungsgemässen Halterung verbessert ist. Die Probe ist üblicherweise ein Gewebe oder ein anderes organisches Material. Es lassen sich jedoch auch anorganische Materialien auf diese Weise schneiden.

Die Probe 7 ist in einem Probenhalter 6 gehalten, welcher auf einem Probenhalterblock 4 befestigt ist. Der Probenhalterblock 4 und der Messerhalter 1 können, müssen jedoch nicht auf derselben, hier nicht dargestellten Basis des Ultramikrotoms angeordnet sein. In einer Variante des Verfahrens verbleibt die Probe 7 während dem Schnitt in Ruhe und nur das Messer oszilliert. In einer anderen Variante oszilliert auch die Probe 7. Hierzu kann zwischen Probenhalter 6 und Probenhalterblock 4 ein zweites Piezoelement 5, vorzugsweise wiederum ein Scher-Piezoelement, angeordnet sein. Dadurch lässt sich die Probe 7 ebenfalls auf einfache Weise in mindestens annähernd paralleler Richtung zur Schneide 21 bewegen. Vorzugsweise bewegt sich dabei die Probe 7 in entgegengesetzter Richtung zum Messer 2. Es ist auch möglich, die Probe 7 zeitlich versetzt in gleicher beziehungsweise entgegengesetzter Richtung so oszillieren zu lassen, dass sich im Umkehrpunkt des Messers 2 die Probe 7 und im Umkehrpunkt der Probe 7 das Messer 2 jeweils bewegt.

In Figur 3 ist ein zweites bevorzugtes Ausführungsbeispiel der erfindungsgemässen Halterung dargestellt. Diese Halterung unterscheidet sich vom ersten Ausführungsbeispiel dadurch, dass das Piezoelement 3 nun nicht mehr in Form eines flachen Quaders zwischen Nutgrund 12 und Messer 2 angeordnet ist. Das Piezoelement 3 ist nun vielmehr an einem der Klinge 20 abgewandten Ende des Klingenhalters 22 angeordnet. Diese Ausführungsform weist den Vorteil auf, dass das Messer 2 selber sehr kurz ausgebildet sein kann, so dass die zu bewegende Masse minimiert ist. Da sich das Messer vorgängig am Piezoelement befestigen lässt und erst zum Schluss die Einheit, gebildet durch Messer und Piezoelement, am Messerhalter befestigt werden muss, ist zudem die Fertigung erleichtert und die Massgenauigkeit erhöht. Auch die Qualitätssicherung ist verbessert, da die Einheit Messer/Piezoelement vor Einbau in den Messerhalter 1 für sich alleine getestet werden kann.

In einer hier nicht dargestellten Ausführungsform ist der Piezokristall beziehungsweise die Piezokeramik direkt mit dem Nutgrund 12 verklebt. Vorzugsweise weist das Piezoelement 3 jedoch, wie hier dargestellt, nicht nur einen Piezokristall oder eine Piezokeramik 32, sondern auch einen Piezohalter 33 auf. Dieser Piezohalter 33 ist quaderförmig ausgebildet und ist mit einer, vorzugsweise breiten Auflagefläche mit dem Nutgrund 12 verklebt. Dies weist den Vorteil auf, dass ein relativ kleiner Piezokristall beziehungsweise eine kleine Piezokeramik 32 verwendet werden kann, dass jedoch trotzdem eine genügend grosse Fläche als Klebefläche dient. Das Messer 2 schwingt bezüglich des Nutgrunds 12 frei. Der Nutgrund 12 kann deshalb eine entsprechende, hier nicht dargestellte Stufe aufweisen.

In den oben beschriebenen Beispielen weist der Messerhalter 1 die Nut 10 auf. Diese Nut 10 hat den Vorteil, dass sie als Führungshilfe beim Befestigen des Piezoelements und des Messers dient. Die Nut 10 ist jedoch nicht zwingend notwendig. Der Messerhalter 1 kann auch eine grundsätzlich andere Form aufweisen. Wesentlich ist lediglich, dass das Piezoelement lediglich das Messer und keine oder möglichst wenige weitere Elemente bewegen muss.

In Figur 4 ist eine nicht zur Erfindung gehörende Ausführungsform dargestellt. Hier weist die Halterung einen Messerhalterblock 8 auf, auf welchem das Piezoelement 3 befestigt ist. Es lässt sich wiederum kleben, hier ist es jedoch verschraubt. Der Messerhalter 1 mit dem darin lagefixiert befestigten, insbesondere verklebten Messer 2 ist freihängend am Piezoelement 3 angeordnet. Durch Anlegen einer Wechselspannung an das Piezoelement 3 lässt sich wiederum die Messerklinge 20 parallel zu ihrer Längsrichtung oszillieren, wie dies mit einem Pfeil dargestellt ist. In dieser Ausführungsform lässt sich als Piezoelement auch ein Kristall oder eine Keramik verwenden, welcher bzw. welche sich in paralleler Richtung zum angelegten elektrischen Feld ausdehnt. Vorzugsweise wird ein mehrschichtiges Element verwendet. Vorteilhaft an der dargestellten Ausführungsform ist, dass der Messerhalter einen Schraubenkopf bildet, wobei der zugehörige Schraubenkörper das Piezoelement durchsetzt und an der gegenüberliegenden Seite durch eine gegen den Messerhalterblock 8 verspannte Gegenmutter 9 gehalten ist. Diese Anordnung weist den Vorteil auf, dass mit ein und demselben Element der notwendige Druckaufbau im Piezoelement erreicht wird und das Messer gehalten werden kann.

Die erfindungsgemässe Halterung ist einfach und mit hoher Massgenauigkeit herstellbar. Zudem ermöglicht sie eine Oszillation der Messerschneide mit einer hohen Frequenz.

### Bezugszeichenliste

- 1: Messerhalter
- 10: Nut
- 11: Seitenwände
- 12: Nutgrund
- 13: Senke
- 2: Messer
- 20: Klinge
- 21: Schneide
- 22: Klingenhalter
- 3: Erstes Piezoelement
- 30: erste Auflagefläche
- 31: zweite Auflagefläche
- 32: Piezokristall
- 33: Piezohalter
- 4: Probenhalterblock
- 5: Zweites Piezoelement
- 6: Probenhalter
- 7: Probe
- 8: Messerhalterblock
- 9: Gegenmutter

## Patentansprüche

1. Halterung mit einem oszillierend bewegbaren Messer (2) eines Ultramikrotoms, wobei das Messer (2) auf einem Messerhalter (1) angeordnet ist, mittels eines Piezoelements (3) oszillierbar ist und vom Piezoelement (3) getragen ist, **dadurch gekennzeichnet, dass** das Piezoelement (3) eine erste Auflagefläche (30) aufweist, welche am Messerhalter (1) befestigt ist und dass es eine zweite Auflagefläche (31) aufweist, an welcher das Messer (2) befestigt ist.

2. Halterung nach Anspruch 1, **dadurch gekennzeichnet, dass** das Messer ansonsten freihängend ist.

3. Halterung nach Anspruch 1 oder 2, **dadurch gekennzeichnet, dass** das Messer einen Klingenhalter (22) und eine daran angeordnete Klinge (20) mit einer Schneide (21) umfasst.

4. Halterung nach Anspruch 3, **dadurch gekennzeichnet, dass** die Klinge (20) und der Klingenhalter (22) derart mehrstückig ausgebildet sind, dass die Klinge (20) für sich alleine auswechselbar ist.

5. Halterung nach einem der Ansprüche 1 bis 3, **dadurch gekennzeichnet, dass** das Messer (2) einstückig ausgebildet ist und vorzugsweise aus Diamant besteht.

6. Halterung nach einem der Ansprüche 1 bis 5, **dadurch gekennzeichnet, dass** das Messer (2) mindestens annähernd parallel zu seiner Schneide (21) oszillierbar ist.

7. Halterung nach Anspruch 6, **dadurch gekennzeichnet, dass** das Piezoelement (3) einen Piezokristall oder eine Piezokeramik (32) aufweist, welcher in einem Scher-Modus betreibbar ist.

8. Halterung nach Anspruch 6, **dadurch gekennzeichnet, dass** die erste und zweite Auflagefläche (30, 31) planparallel zueinander verlaufen und dass sich die Schneide (21) mindestens annähernd parallel zu diesen Auflageflächen (30, 31) erstreckt.

9. Halterung nach einem der Ansprüche 1 bis 8, **dadurch gekennzeichnet, dass** der Messerhalter (1) eine Nut (10) aufweist, welche zwei Seitenwände (11) und einen Nutgrund (12) aufweist, wobei der Nutgrund (12) als Schrägfläche ausgebildet ist und als Befestigungsfläche für das Piezoelement (3) dient und wobei die Nut (10) eine Breite aufweist, welche grösser ist als die Breite eines Klingenhalters (22) des Messers (2).

10. Halterung nach einem der Ansprüche 1 bis 9, **dadurch gekennzeichnet, dass** das Piezoelement (3) einen Piezokristall beziehungsweise eine Piezokeramik (32) und einen Piezohalter (33) aufweist, dass das Messer (2) am Piezokristall beziehungsweise an der Piezokeramik (32) befestigt ist und dass der Piezohalter (33) am Messerhalter (1) angeordnet ist.

11. Ultramikrotom mit einer Halterung mit einem oszillierend bewegbaren Messer (2) gemäss einem der Ansprüche 1 bis 10 und einem Probenhalterblock (4) und einem daran befestigten, oszillierend bewegbaren Probenhalter (6) zur Halterung einer mittels des Messers (2) zu schneidenden Probe (7), **dadurch gekennzeichnet, dass** der Probenhalter (6) frei hängend an einem zweiten Piezoelement (5) befestigt ist, welches mit dem Probenhalterblock (4) verbunden ist, wobei das zweite Piezoelement (5) in einem Scher-Modus betreibbar ist.

## Claims

1. A holding device having an oscillatory ultramicrotome cutter (2), the cutter (2) being arranged on a cutter holder (1), being adapted to oscillate by means of a piezoelectric element (3), and being supported by the piezoelectric element (3), **characterised in that** the piezoelectric element (3) has a first supporting surface (30) that is fastened on the cutter holder (1), and **in that** it has a second supporting surface (31), on which the cutter (2) is fastened.

2. The holding device as claimed in claim 1, **characterised in that** the cutter is otherwise freely suspended.

3. The holding device as claimed in claim 1 or 2, **characterised in that** the cutter comprises a blade holder (22) and a blade (20) arranged thereon, the blade having a cutting edge (21).

4. The holding device as claimed in claim 3, **characterised in that** the blade (20) and the blade holder (22) are of multipartite design such that the blade (20) alone is exchangeable.

5. The holding device as claimed in one of claims 1 to 3, **characterised in that** the cutter (2) is of unipartite design and preferably consists of diamond.

6. The holding device as claimed in one of claims 1 to 5, **characterised in that** the cutter (2) is adapted to oscillate at least approximately parallel to its cutting edge (21).

7. The holding device as claimed in claim 6, **characterised in that** the piezoelectric element (3) comprises a piezoelectric crystal or a piezoelectric ceramic (32) that is operable in a shear mode.

8. The holding device as claimed in claim 6, **characterised in that** the first and second supporting surfaces (30, 31) extend in a plane-parallel fashion to one another, and **in that** the cutting edge (21) extends at least approximately parallel to these supporting surfaces (30, 31).

9. The holding device as claimed in one of claims 1 to 8, **characterised in that** the cutter holder (1) has a groove (10) that has two side walls (11) and a groove base (12), the groove base (12) being designed as an oblique surface and serving as fastening surface for the piezoelectric element (3), and the groove (10) having a width that is greater than the width of a blade holder (22) of the cutter (2).

10. The holding device as claimed in one of claims 1 to 9, **characterised in that** the piezoelectric element (3) comprises a piezoelectric crystal or a piezoelectric ceramic (32) and a piezo holder (33), **in that** the cutter (2) is fastened on the piezoelectric crystal or on the piezoelectric ceramic (32), and **in that** the piezo holder (33) is arranged on the cutter holder (1).

11. An ultramicrotome comprising a holding device having an oscillatory cutter (2) as claimed in one of claims 1 to 10, and comprising a sample holder block (4) and, fastened thereon, an oscillatory sample holder (6) for holding a sample (7) to be cut by means of the cutter (2), **characterised in that** the sample holder (6) is fastened in a freely suspended fashion on a second piezoelectric element (5), which is connected to the sample holder block (4), the second piezoelectric element (5) being operable in a shear mode.

## Revendications

1. Support équipé d'un couteau (2) d'ultramicrotome pouvant être animé d'un mouvement oscillatoire, moyennant quoi le couteau (2) est disposé sur un support de couteau (1), est animé d'un mouvement oscillatoire au moyen d'un élément piézo (3) et est soutenu par l'élément piézo (3), **caractérisé en ce que** l'élément piézo (3) présente une première surface d'appui (30), laquelle est fixée sur le support de couteau (1), et **en ce qu'**il présente une deuxième surface d'appui (31), sur laquelle le couteau (2) est fixé.

2. Support selon la revendication 1, **caractérisé en ce que** le couteau est sinon suspendu librement.

3. Support selon la revendication 1 ou 2, **caractérisé en ce que** le couteau comprend un porte-lame (22) et une lame (20) fixée à celui-ci comportant un tranchant (21) .

4. Support selon la revendication 3, **caractérisé en ce que** la lame (20) et le porte-lame (22) sont configurés en plusieurs parties de telle sorte que la lame (20) seule puisse être remplacée.

5. Support selon une des revendications 1 à 3, **caractérisé en ce que** le couteau (2) est configuré en un seul tenant et est de préférence constitué de diamant.

6. Support selon une des revendications 1 à 5, **caractérisé en ce que** le couteau (2) peut être animé d'un mouvement oscillatoire au moins approximativement parallèlement à son tranchant (21).

7. Support selon la revendication 6, **caractérisé en ce que** l'élément piézo (3) présente un cristal piézo ou une céramique piézo (32), qui peuvent être mis en fonctionnement en mode de cisaillement.

8. Support selon la revendication 6, **caractérisé en ce que** la première et la deuxième surface d'appui (30,31) s'étendent sur des plans parallèles l'un à l'autre et **en ce que** le tranchant (21) s'étend au moins approximativement parallèlement à ces surfaces d'appui (30,31).

9. Support selon une des revendications 1 à 8, **caractérisé en ce que** le support de couteau (1) présente une rainure (10), laquelle présente deux parois latérales (11) et un fond de rainure (12), moyennant quoi le fond de rainure (12) est configuré comme une surface inclinée et sert de surface de fixation pour l'élément piézo (3) et moyennant quoi la rainure (10) présente une largeur, qui est plus grande que la largeur d'un porte-lame (22) du couteau (2).

10. Support selon une des revendications 1 à 9, **caractérisé en ce que** l'élément piézo (3) présente un cristal piézo, respectivement une céramique piézo (32) et un support piézo (33), **en ce que** le couteau (2) est fixé sur le cristal piézo, respectivement sur la céramique piézo (32) et **en ce que** le support piézo (33) est disposé sur le support de couteau (1).

11. Ultramicrotome comportant un support avec un couteau (2) pouvant être animé d'un mouvement oscillatoire selon une des revendications 1 à 10 et un bloc de support d'échantillon (4) et un support d'échantillon (6) fixé à celui-ci, pouvant être animé d'un mouvement oscillatoire afin de supporter un échantillon (7) à découper au moyen du couteau (2), **caractérisé en ce que** le support d'échantillon (6) est fixé en étant suspendu librement sur un deuxième élément piézo (5), lequel est relié au bloc de support d'échantillon (4), moyennant quoi le deuxième élément piézo (5) peut être mis en fonctionnement en mode de cisaillement.
